# EUROPÄISCHE PATENTSCHRIFT

(11) **EP 2 729 404 B1**
(45) Veröffentlichungstag und Bekanntmachung des Hinweises auf die Patenterteilung: **30.05.2018**
(21) Anmeldenummer: 12743884.4
(22) Anmeldetag: 05.07.2012
(51) Int. Cl.: C01B 32/05, C01B 3/24, C01B 3/30, C01B 3/28, C10B 57/00

(54) **VERFAHREN ZUR PARALLELEN HERSTELLUNG VON WASSERSTOFF UND KOHLENSTOFFHALTIGEN PRODUKTEN**
METHOD FOR THE PARALLEL PRODUCTION OF HYDROGEN AND CARBON-CONTAINING PRODUCTS
PROCÉDÉ DE PRODUCTION PARALLÈLE D'HYDROGÈNE ET DE PRODUITS À BASE DE CARBONE

(30) Priorität: 05.07.2011 DE 102011106645
(43) Veröffentlichungstag der Anmeldung: 14.05.2014
(73) Patentinhaber: Linde Aktiengesellschaft, 80331 München (DE); BASF SE, 67056 Ludwigshafen am Rhein (DE)
(72) Erfinder: MAA , Hans-Jürgen, 01328 Dresden (DE); GÖKE, Volker, 82538 Geretsried (DE); MACHHAMMER, Otto, 68163 Mannheim (DE); GUZMANN, Marcus, 82541 Münsing (DE); SCHNEIDER, Christian, 68161 Mannheim (DE); HORMUTH, Wolfgang Alois, 67487 St Martin (DE); BODE, Andreas, 68163 Mannheim (DE); KLINGLER, Dirk, 68163 Mannheim (DE); KERN, Matthias, 76135 Karlsruhe (DE); KOLIOS, Grigorios, 67435 Neustadt (DE)
(74) Vertreter: BASF IP Association
(86) Internationale Anmeldenummer: PCT/EP2012/002877
(87) Internationale Veröffentlichungsnummer: WO 2013/004398

(56) Entgegenhaltungen:
- CA-A1- 2 345 950
- DE-B- 1 266 273
- GB-A- 644 013
- GB-A- 883 751
- US-A1- 2002 007 594
- US-A1- 2007 186 470
- MURADOV N ET AL: "Fossil hydrogen with reduced CO2 emission: Modeling thermocatalytic decomposition of methane in a fluidized bed of carbon particles", INTERNATIONAL JOURNAL OF HYDROGEN ENERGY, ELSEVIER SCIENCE PUBLISHERS B.V., BARKING, GB, Bd. 30, Nr. 10, 1. August 2005 (2005-08-01), Seiten 1149-1158, XP027750548, ISSN: 0360-3199 [gefunden am 2005-08-01]

## Beschreibung

Die Erfindung betrifft ein Verfahren zur parallelen Herstellung von Wasserstoff und kohlenstoffhaltigen Produkten, bei dem Kohlenwasserstoffe in einen Reaktionsraum eingeleitet und in Gegenwart eines kohlenstoffhaltigen Granulats thermisch in Kohlenstoff und Wasserstoff zersetzt werden und mindestens ein Teil der für die Kohlenwasserstoffzersetzung erforderlichen thermischen Energie über einen gasförmigen Wärmeträger bereitgestellt wird, der außerhalb des Reaktionsraums erzeugt wird.

Wasserstoff stellt eine Schlüsselkomponente im Energie- und Chemiesektor dar. Der weltweite Bedarf für Wasserstoff liegt bei 50 Mio t/a. Die Einsatzgebiete von kohlenstoffhaltigen Produkten sind vielfältig, beispielsweise ist der weltweite Kokskohlenbedarf (als Reduktionsmittel in der Stahlindustrie) mit ca. 1 Mrd t/a eine der größten Kohlenstoffverwendungen.

Die CO2-Emissionen in Deutschland betrugen im Jahre 2010 rd. 960 Mio. t CO2-Äquivalent. Chemie- und Stahlindustrie tragen hierzu zu gleichen Teilen insgesamt ca. 10 % bei. In der Stahlindustrie ist der für die CO2-Emissionen wichtige, spezifische Reduktionsmittelbedarf durch konsequente Weiterentwicklung der Produktionsverfahren bereits auf ein Minimum gesenkt worden. Eine weitere Absenkung des Reduktionsmittelbedarfs durch Prozessoptimierung ist nur bedingt realisierbar. Gleiches gilt für die Chemieindustrie, deren CO2-Intensität im Wesentlichen vom Energiebedarf der Produktionsverfahren abhängt.

Unter ökologischen und ökonomischen Gesichtspunkten bestehen in beiden Branchen hohe Anreize, die CO2-Emissionen durch Veränderung der Rohstoffbasis, CO2-arme Erzeugungstechnologien, Optimierung des Energiebedarfs und Verwertung von prozessbedingtem CO2 zu großvolumigen Basischemikalien zu senken. Eine geeignete Basischemikalie ist beispielsweise Wasserstoff.

Hinsichtlich einer Veränderung der Rohstoffbasis ist die Rohstoffimportabhängigkeit Deutschlands und etlicher anderer westlicher Industrienationen wesentlich. Während die Versorgungssicherheit mit Erdgas für die nächsten Jahrzehnte innerhalb Europas gesichert ist, wird bei der Erdölförderung das Maximum in Kürze erreicht. Die Chemieindustrie hat starke Bestrebungen, sich von der Erdölabhängigkeit zu lösen.

Bei der speziellen, in großem Umfang in der Stahlbranche eingesetzten Kokskohle sind die deutschen Kokereien seit Schließung von Bergwerk Ost zu 100 % auf Importe angewiesen. Als Folge des steigenden Eigenbedarfs im asiatischen Raum ist der Preis für Kokskohle in Deutschland seit 2004 um Faktor 4 gestiegen. Die deutsche Stahlindustrie benötigt aktuell ca. 10 Mio. t Koks pro Jahr, wovon 4 Mio. t aufgrund fehlender Kokereikapazität importiert werden müssen. In Deutschland produzierter Koks wird unter Zumischung erprobter Kohlenstoffträger zur Kokskohle hergestellt.

Nach dem Stand der Technik wird Koks durch Trockendestillation in Koksöfen aus Kokskohle gewonnen. Um ein Verbrennen des rotglühend aus dem Koksofen austretenden Kokses zu verhindern, muss er rasch gelöscht werden. Hierbei kommen Trocken- oder Nasskühlverfahren zum Einsatz, die teuer und/oder mit der Freisetzung nennenswerter Schadstoffmengen verbunden sind.

Für den Einsatz im Hochofenprozess muss der Koks hohe Qualitätsanforderungen hinsichtlich Zusammensetzung, Festigkeit, Reaktivität und Korngröße erfüllen. Als Ersatzreduktionsmittel für Koks wurde seit Mitte der 80er Jahre zunehmend Kohlenstaub in die Hochöfen eingeblasen und der Verbrauch dieser Einblaskohlen in Deutschland beträgt im Jahr 2011 rd. 3,8 Mio. t.

Derzeit wird zur industriellen Gewinnung von molekularem Wasserstoff die Dampfreformierung angewendet. Für die Gewinnung von 100 kg Wasserstoff unter Verwendung der Dampfreformierung fallen 1080 kg CO2 an. Unter Verwendung einer Erdgas-Pyrolyse werden lediglich 694 kg CO2 frei, zusätzlich wird 395 kg Koks hergestellt, das zusammen mit der benötigten thermischen Energie einen CO2 Beitrag von 207 kg hat. Werden die Emissionen für Koks und thermische Energie als konstant mit 207 kg betrachtet, fallen für die Wasserstoffproduktion nur noch 487 kg an. Im Ergebnis liegt die CO2-Emission für 100 kg Wasserstoff im Stand der Technik bei ca. 11 kg CO2/kgH2, bei einer Erdgas-Pyrolyse könnte diese nur noch 5 kg CO2/kgH2 betragen.

Die thermische Zersetzung von Kohlenwasserstoffen erfolgt bei hohen Temperaturen im Bereich von 800 und 1600°C; im Fall von Plasmaverfahren sogar noch darüber. Bedingt durch das thermodynamische Gleichgewicht und die Reaktionskinetik sind speziell für gesättigte Verbindungen, insbesondere für Methan, diese hohen Temperaturen erforderlich, um in annehmbar kurzer Zeit (Millisekunden bis Sekunden) ausreichend hohe Konversionsraten von mehr als 50% zu erreichen.

Zur Realisierung dieser hohen Temperaturen in Pyrolyseverfahren und in der Koksherstellung gibt es im Stand der Technik unterschiedliche Lösungen: In US 2,389,636, US 2,600,07, US 5,486,216 und in US 6,670,058 wird die Nutzung der festen Schüttung als Wärmeträger beschrieben. In DE 600 16 59 T, US 3,264,210 und CA 2 345 950 werden in unterschiedlicher Weise oxidativen Verfahren als Wärmequelle genutzt. In US 2,799,640, US 3,259,565 und DE 1 266 273 wird eine elektrische Wärmequelle verwendet, ferner ist in DE 692 08 686 T die Verwendung eines Plasmabrenners beschrieben.

Im Folgenden eine Übersicht des Stand der Technik im Einzelnen:
In US 2,389,636 wird die Spaltung von Kohlenwasserstoffen an einer vorgeheizten Schüttung beschrieben. Die Schüttung besteht aus keramischen oder metallischen Materialien und wird vor dem Eintritt in die Reaktionszone in einer separaten Kammer aufgeheizt. Dabei werden die durch vorherige Verwendung in der Reaktionskammer mit Kohlenstoff beladenen Trägerpartikeln einem heißen Luftstrom ausgesetzt. Die durch die Kohlenstoffverbrennung freigesetzte Wärme wird in den Trägerpartikeln gespeichert. Es wird folglich kein kohlenstoffhaltiges Produkt gewonnen. Es wird eine kontinuierliche Fahrweise in einem Fließbett beschrieben; die Wärmerückgewinnung ist als Ziel dieser Fahrweise genannt.

In US 2,600,078 wird die Herstellung von Kokspartikeln definierter Korngröße in einem Wanderbett beschrieben. Das Kohlenstoffsubstrat wird solange im Kreis gefahren, d.h. vorgeheizt, in den Reaktor eingebracht und nach der Reaktion aus dem Reaktor ausgeschleust, bis es die gewünschte Größe aufweist. Die Beschichtung der Kohlenstoffpartikel findet in der Flüssigphase statt. Die Gewinnung von Wasserstoff als Produkt wird nicht offenbart.

In US 5,486,216 wird gelehrt, den in einem Koksofen erzeugten, noch heißen Koks in einen Schachtofen einzubringen. Der Koks, der den Schachtofen als Wanderbett von oben nach unten durchläuft, wird im Gegenstrom von einem aus Methan und Stickstoff bestehenden Gasgemisch durchströmt, wobei Methan bis zu seiner Zersetzungstemperatur aufgeheizt wird und in einer endothermen Reaktion in Wasserstoff und Kohlenstoff zerfällt. Der gebildete Kohlenstoff lagert sich auf dem eingesetzten Koks ab und verbessert dessen Struktur, so dass er vorteilhaft im Hochofen eingesetzt werden kann. Die für die endotherme Methan-Zersetzung erforderliche Energie wird dem heißen Koks entzogen, der dadurch abkühlt. Abgekühlter Koks, der nach unten aus dem Schachtofen abgezogen wird, wird durch heißen Koks ersetzt, der in den oberen Bereich des Schachtofens eingebracht wird.

In US 6,670,058 wird eine Kohlenwasserstoff-Pyrolyse in einem Fließbettreaktor beschrieben. In einer externen Brennkammer wird eine Teilverbrennung von ausgetragenem Kohlenstoff und fluider Brennstoffe durchgeführt und die heißen Kohlenstoffpartikel werden als Wärmeträger in die Reaktionskammer zurückgeführt. In der Reaktionskammer ist keine weitere Wärmequelle vorgesehen, ferner wird keine Wärmeintegration beschrieben. Es wird eine Rückführung nicht vollständig umgesetzter Kohlenwasserstoffe als Katalysator-Präkursoren offenbart.

Die durch eine vorgeheizte Schüttung (je Mengeneinheit Koks) gewonnen und abgeschieden werden kann, ist in erster Linie durch die für die Methanzersetzung nutzbare Energie des heißen Kokses bestimmt. Da die nutzbare Energie, etwa durch Erhöhung der Einsatztemperatur des Kokses/der Schüttung, nicht beliebig gesteigert werden kann, ist es nicht möglich, eine beliebige Kohlenstoffmenge abzuscheiden. Gemäß US 5,486,216 kann lediglich eine Kohlenstoffmenge von bis zu 5% der eingesetzten Koksmenge abgeschieden werden. Diese relativ geringe Menge ist jedoch nicht immer ausreichend, um Koks beliebiger Qualität z.B. für einen Einsatz im Hochofen aufzubereiten.

Nachteilig an der externen Aufheizung der festen Schüttung und deren Nutzung als Wärmeträger ist die schwierige Handhabung von heißen Feststoffen. Bei

Temperaturen von über 1000°C treten verstärkt Oberflächeneffekte im Bereich Adhäsion, Agglomerieren und Abrasion auf, die beispielsweise ein Ein- oder Ausschleusen in einem Reaktor erschweren.

In DE 600 16 59 T ist ein Verfahren zur Pyrolyse von Kohlenwasserstoffen beschrieben, in welchem ein Teil des Kohlenwasserstoffstroms genutzt wird, um die Energie für die Pyrolyse zur Verfügung zu stellen. Hierbei wird die Pyrolyse in einem Reaktionsraum durchgeführt, welcher in Strömungsrichtung von porösen Rohren durchzogen ist. Durch diese strömt das Oxidationsmittel Luft oder Sauerstoff. Durch die poröse Wand dringt dabei das Oxidationsmittel senkrecht zum Kohlenwasserstoffstrom in den Reaktionsraum ein. Dadurch bildet sich in Nähe der porösen Wand eine dünne Flammenschicht aus, welche die Energie zur Pyrolyse dem Reaktionsraum zuführt. Weder die Verwendung eines Kohlenstoffträgers noch die Herstellung einer Kohlenstoffproduktes sind beschrieben.

US 3,264,210 beschreibt die Herstellung von Koks und Wasserstoff als Koppelprodukte, wobei der Wasserstoff im Prozess als Brennstoff verwendet wird. Der dazugehörige Reaktor besteht aus zwei Bereichen. Im ersten Bereich läuft die Pyrolyse in einem Wirbelbett unter Verwendung von Kohlenstoff als Präkursor / Träger ab. Die Wärmeübertragung vom Brenner zum Pyrolysereaktor erfolgt konvektiv und durch Strahlung. Im zweiten Bereich wird der produzierte Koks in einem Schacht formuliert, um die geforderte Größe zu bekommen.

Nachteilig an der direkten Verwendung von oxidativen Verfahren ist das Einbringen von Fremdstoffen in die Reaktionszone und folglich eine Kontamination der Produkte. Ferner besteht die Gefahr, dass der Kohlenstoff ungewollt abbrennt oder der Eduktstrom mitverbrannt wird. Bei einer indirekten Wärmeübertragung aus Verbrennungsprozessen in die Reaktionszone wären bei den erforderlich hohen Temperaturen große Übertragungsflächen nötig. Eine Realisierung solch großer Übertragungsflächen durch beispielsweise Einbauten im Reaktor ist allerdings für eine Reaktion in einem Wanderbett oder Wirbelschicht unter anderem aufgrund der Versperrung der durchströmten Fläche sowie der mechanischen Belastung der Einbauten problematisch.

Um die Nachteile der Verwendung eines oxidativen Verfahrens als Energiequelle und die Nachteile, die ein heißes Feststoff-Handling mit sich bringt, zu umgehen, wurde die Verwendung von elektrischen Energiequellen vorgeschlagen:
US 2,799,640 beschreibt die Aktivierung der Kohlenwasserstoffzersetzung als Gasphasen- oder Gas/Feststoff-Reaktion durch elektrische Entladungen zwischen den Partikeln eines Fließbettes. Als Schüttgut bzw. Wirbelgut ist der Einsatz von Kohlenstoff beschrieben.

US 3,259,565 beschreibt die Spaltung schwerer Kohlenwasserstoffe zu leichten Kohlenwasserstoffen, Wasserstoff und Kohlenstoff in einem Fließbett aus Kohlenstoff. Es wird eine elektrische Wärmeversorgung der Spaltung mit dem Fließbett als Widerstandsheizung beschrieben. Ferner wird die Rückführung der Koksagglomerate und ein Gegenstromwärmetausch mit dem gasförmigen Produktstrom oberhalb der Reaktionszone offenbart. Unterhalb der Reaktionszone erfolgt ein Wärmeaustausch zwischen den gewachsenen Kohlenstoffagglomeraten und dem zugeführten Gas.

DE 1 266 273 beschreibt eine Kohlenwasserstoffzerlegung in Wasserstoff und Koks, wobei der Koks eine hohe Reinheit und Festigkeit aufweist. Die Beheizung der Reaktion wird elektrisch resistiv durchgeführt, indem das Kohlenstoffbett, das als Wanderbett oder Wirbelbett beschrieben ist, als Widerstand genutzt wird. Ferner wird eine Wärmeintegration durch Gegenstromführung zwischen Feststoff- und Gasstrom beschrieben.

Des weiteren beschreibt DE 2 420 579 die induktive Beheizung eines Koksbettes.

In DE 692 08 686 T2 wird ein Plasmareaktor als Reaktionszone für eine Kohlenwasserstoffpyrolyse beschrieben. Ein vorgeheiztes Kohlenstoffsubstrat wird in die Flamme eines Plasmabrenners eingedüst. Die Mischzone bildet gleichzeitig die Hauptreaktionszone. Die Umsetzung wird in einer nachgeschalteten Verweilzeitstrecke abgeschlossen. Wasserstoff wird teilweise in den Plasmabrenner zurückgeführt, womit eine partielle Wärmeintegration realisiert wird. Neben Wasserstoff wird Ruß als Produkt gewonnen. Der Ruß wird homogen als Primärpartikeln erzeugt, es wird kein Einsatz eines Substrates beschrieben.

In CA 2 345 950 wird die Pyrolyse von Methan an Kohlenstoffstaub beschrieben. Nach dem Aufwachsen des Kohlenstoffs bis zu einer bestimmten Größe wird dieser mechanischen ausgetragen. Es wird beschrieben, dass die Wärmezufuhr elektrisch oder über Rauchgase erfolgen kann, Details zur Ausgestaltung des Wärmeeintrags sind leider nicht offenbart. Eine Wärmeintegration ist sowohl über die Gasströme als auch durch Gegenstromwärmeaustausch zwischen Gas- und Feststoffstrom möglich.

Der Nachteil an den beschriebenen elektrischen Verfahren ist allerdings, dass diese hohe Betriebs- und Investitionskosten aufweisen. Ferner ist ungeklärt, ob eine gleichmäßige Aufheizung der Reaktionszone über ein elektrisches Verfahren auch großtechnisch zu realisieren ist.

Aufgrund der aufgezählten Nachteile konnte bislang auf Basis des aufgeführten Stands der Technik keine großtechnische Produktion der Koppelprodukte Wasserstoff und Kohlenstoff auf Basis von Kohlenwasserstoffen entwickelt werden.

Derzeit werden für großtechnische Kohlenwasserstoffzersetzungen, beispielsweise zur Produktion von Synthesegas oder Ruß, direkte oxidative Verfahren als Energiequelle verwendet (Reimert, R., Marschner, F., Renner, H.-J., Boll, W., Supp, E., Brejc, M., Liebner, W. and Schaub, G. 2011. Gas Production, 2. Processes. Ullmann's Encyclopedia of Industrial Chemistry). Um die gewünschten hohen Temperaturen und eine zuverlässige Aufheizung und Fahrweise der Reaktion zu realisieren, musste bislang ein gewisser Grad an Fremdkontamination durch die Verbrennungsgase, bzw. die Gefahr der Verbrennung der Edukte und/oder Produkte in Kauf genommen werden.

Aufgabe der vorliegenden Erfindung ist es daher, ein Verfahren zur Herstellung von den zwei Wertprodukten Wasserstoff und Kohlenstoff aufzuzeigen, das großtechnisch mit hoher Ausbeute realisierbar ist. Ferner ist die Aufgabe der vorliegenden Erfindung einen Wasserstoff mit geringem CO2-Fußabdruck für die chemische Industrie und für eine sich entwickelnde Mobilität bereitzustellen und parallel den Kohlenstoff stofflich zu verwerten. Eine weitere Aufgabe der vorliegenden Erfindung ist es, einen Kohlenstoff mit hoher Reinheit herzustellen, der sich beispielsweise als Einblaskohle, als Kokskohlenersatz oder sogar als Hochofenkoks in der Stahlbranche einsetzen lässt. Eine weitere Aufgabe der Erfindung ist es, die Menge sich bildenden Kohlenstoffs, der sich auf dem kohlenstoffhaltigem Granulat anlagert, in einem weiten Bereich steuern zu können.

Die gestellte Aufgabe wird erfindungsgemäß mit einem Verfahren zur parallelen Herstellung von Wasserstoff und einem oder mehreren kohlenstoffhaltigen Produkten, gelöst, bei dem Kohlenwasserstoffe in einen Reaktionsraum eingeleitet und in Gegenwart eines kohlenstoffreichen Granulats thermisch in Kohlenstoff und Wasserstoff zersetzt werden, das dadurch gekennzeichnet ist, dass wenigstens ein Teil der für die Kohlenwasserstoffzersetzung erforderlichen thermischen Energie über einen oder mehrere gasförmige Wärmeträger bereitgestellt wird, wobei die thermische Energie außerhalb des Reaktionsraums erzeugt wird und anschließend die so aufgeheizten gasförmigen Wärmeträger in den Reaktionsraum eingebracht werden, wobei der gasförmige Wärmeträger zur Kohlenwasserstoffzersetzungsreaktion inert ist und/oder ein Produkt dieser Kohlenwasserstoffreaktion darstellt und im Reaktionsraum der gasförmige Wärmeträger seine Wärme an den oder die Reaktanden abgibt.

Vorteilhaft wird mindestens 50 % der für die Kohlenwasserstoffzersetzung und für den Wärmerücktausch erforderlichen thermischen Energie über gasförmige Wärmeträger bereitgestellt, bevorzugt mehr als 80 %, insbesondere mehr als 90 %. Es können ferner weitere aus dem Stand der Technik bekannte Energiequellen zum Einsatz kommen. Bevorzugt ist eine Kombination mit elektrischer Widerstandsheizung, elektrischer Induktionsheizung oder Strahlungsheizung.

Unter einem kohlenstoffhaltigen Granulat ist in der vorliegenden Erfindung ein Material zu verstehen, das vorteilhaft aus festen Körnern besteht, die mindestens 50 Gew.-%, bevorzugt mindestens 80 Gew.-%, insbesondere mindestens 90 Gew.-% Kohlenstoff aufweisen. Das kohlenstoffhaltige Granulat weist vorteilhaft eine Körnung, d.h. einen Äquivalenzdurchmesser, der durch Siebung mit einer bestimmten Maschengröße bestimmbar ist, von 0,5 bis 100 mm, bevorzugt von 1 bis 80 mm, auf. Das kohlenstoffhaltige Granulat ist vorteilhaft kugelförmig. In dem erfindungsgemäßen Verfahren kann eine Vielzahl von unterschiedlichen kohlenstoffhaltigen Granulaten eingesetzt werden. Ein derartiges Granulat kann beispielsweise aus Kohle, Koks, Koksgrus und/oder Mischungen hieraus bestehen. Koksgrus weist in der Regel eine Körnung von kleiner 20 mm auf. Ferner kann das kohlenstoffhaltige Granulat 0 bis 15 Gew.-% bezogen auf die Gesamtmasse des Granulats, bevorzugt 0 bis 5 Gew.-%, Metall, Metalloxid und/oder Keramik enthalten. Mit besonderem Vorzug werden Granulate eingesetzt, die Koksgrus und/oder geringwertigen, d.h. nicht direkt für den Verhüttungsprozess geeigneten Koks, Kokereikoks auf Braun- oder Steinkohlebasis und/oder aus Biomasse gewonnenen Koks umfassen.

Koksgrus eignet sich aufgrund seiner kleinen Körnung nicht für den direkten Einsatz im Hochofen. Die Korngröße des Hochofenkokses beträgt zwischen 35mm und 80mm, bevorzugt zwischen 50 mm und 60 mm. Durch diese Größen ist die geforderte Durchlässigkeit der Koksschüttung für die Verbrennungsluft und für die Schmelze in einem Hochofen gewährleistet.

Vorteilhaft wird die 5- bis 10-fache Menge an Feststoff-Masse des kohlenstoffhaltigen Granulats im Vergleich zur produzierten Wasserstoff-Masse eingesetzt, bevorzugt die 6- bis 8-fache Menge.

Der durch die erfindungsgemäße Zersetzungsreaktion gebildete Kohlenstoff lagert sich vorteilhaft zu mindestens 90 Gew.-% bezogen auf die gesamte Masse des gebildeten Kohlenstoffs, bevorzugt mindestens 95 Gew.-%, an das kohlenstoffhaltige Granulat an.

Unter einem kohlenstoffhaltigen Produkt ist in der vorliegenden Erfindung ein Produkt zu verstehen, dass vorteilhaft zu mindestens 90 Gew.-%, bevorzugt zu mindestens 95 Gew.-%, besonders bevorzugt zu mindestens 98 Gew.-%, insbesondere zu mindestens 99 Gew.-%, aus Kohlenstoff besteht. Das kohlenstoffhaltige Produkt weist vorteilhaft weniger als 5 Gew.-%, bevorzugt weniger als 1 Gew.-%, besonders bevorzugt weniger als 0,1 Gew.-%, bezogen auf die Gesamtmasse des kohlenstoffhaltigen Produkts, an Asche auf. Das kohlenstoffhaltige Produkt weist vorteilhaft weniger als 5 Gew.-%, bevorzugt weniger als 1 Gew.-%, besonders bevorzugt weniger als 0,1 Gew.-,% bezogen auf die Gesamtmasse des kohlenstoffhaltigen Produkts, an Alkalien, insbesondere Oxide und Hydroxide der Alkali- und Erdalkalimetalle, schwefel- und/oder phosphorhaltigen Verbindungen auf. Diese kohlenstoffhaltigen Produkte lassen sich beispielsweise in der Stahlbranche als Einblaskohle, als Kokskohlenzusatzstoff oder als Hochofenkoks einsetzen.

Vorteilhaft werden durch das erfindungsgemäße Verfahren mindestens 5 Gew.-%, bezogen auf die ursprüngliche Gesamtmasse des Granulats, Kohlenstoff auf dem eingesetzten kohlenstoffhaltigen Granulat abgeschieden, bevorzugt mindestens 10 Gew.-%, besonders bevorzugt mindestens 20 Gew.-%, insbesondere mindestens 30 Gew.-%. Die Masse des eingesetzten kohlenstoffhaltigen Granulats lässt sich vorteilhaft durch das erfindungsgemäße Verfahren um 5 Gew.-% bis 50 Gew.-% bezogen auf die ursprüngliche Gesamtmasse des Granulats, bevorzugt um 10 Gew.-% bis 45 Gew.-%, besonders bevorzugt um 20 bis 30 Gew.-%, vergrößern.

Eine bevorzugte Ausgestaltung des erfindungsgemäßen Verfahrens sieht vor, dass die erforderliche thermische Energie für den gasförmigen Wärmeträger und somit für die Kohlenwasserstoffzersetzung durch Oxidation oder partielle Oxidation eines Brennstoffs erzeugt wird, der Kohlenwasserstoffe und/oder Wasserstoff umfasst. Der Wasserstoff kann beispielsweise aus dem bei der Kohlenwasserstoffzersetzung gewonnenem Wasserstoff bestehen, der aus dem Reaktionsraum abgezogen und ggf. nach eventueller Reinigung (z. B. Entstaubung) dem Brenner zugeleitet wird. Als Oxidationsmittel werden vorzugsweise Luft und/oder mit Sauerstoff angereicherte Luft und/oder technisch reiner Sauerstoff verwendet. Oxidation oder partielle Oxidation werden außerhalb des Reaktionsraums durchgeführt, wozu der Brennstoff mit einem Oxidationsmittel gemischt und zur Reaktion gebracht wird. Das entstehende heiße Gas hat vorteilhaft Temperaturen im Bereich von 800 bis 2200°C, bevorzugt 1000 bis 1800°C. Das entstehende heiße Gas wird nachfolgend entweder genutzt, um einen gasförmigen zur Kohlenwasserstoffreaktion inerten Wärmeträger und/oder einen Wärmeträger, der ein Produkt dieser Kohlenwasserstoffreaktion darstellt, aufzuheizen, der anschließend in den Reaktionsraum eingeleitet und durch das kohlenstoffhaltige Granulat geführt wird, wobei es einen Teil seiner fühlbaren Wärme an das kohlenstoffhaltige Granulat und/oder die zu zersetzenden Kohlenwasserstoffe abgibt. Als gasförmiger zur Kohlenwasserstoffreaktion inerter Wärmeträger wird vorteilhaft Stickstoff verwendet; als Wärmeträger, der ein Produkt dieser Kohlenwasserstoffreaktion darstellt, wird bevorzugt Wasserstoff verwendet.

Vorteilhaft wird das erfindungsgemäße Verfahren ohne Verwendung eines Oxidationsmittels im Reaktionsraum durchgeführt.

Durch das erfindungsgemäße Verfahren kann durch das Einleiten des gasförmigen Wärmeträgers eine Wärmestromdichte von größer als 100kW/m3, bevorzugt größer als 500kW/m3, besonders bevorzugt größer als 1000kW/m3, bezogen auf das Bettvolumen der Reaktionszone zugeführt werden (volumenbezogene Heizleistung).

In einer anderen Ausgestaltung wird der gasförmige Wärmeträger mit Hilfe einer außerhalb des Reaktionsraums angeordneten elektrischen Heizeinrichtung erzeugt, durch die ein Gasstrom geführt und dabei mit Hilfe eines Lichtbogen erhitzt wird, bevor er mit einer Temperatur zwischen 2000 und 5000°C, bevorzugt zwischen 3500 und 4000°C in den Reaktionsraum eingeleitet wird oder zur Aufheizung eines gasförmigen Wärmträgers dient, der zur Kohlenwasserstoffzersetzungsreaktion inert ist und/oder ein Produkt dieser Kohlenwasserstoffreaktion darstellt. Der so aufgeheizte Wärmeträger wird dann in den Reaktionsraum eingeleitet. Im Reaktionsraum gibt der gasförmige Wärmeträger seine Wärme an den oder die Reaktanden abgibt. Der Gasstrom kann beispielsweise aus bei der Kohlenwasserstoffzersetzung gewonnenem Wasserstoff bestehen, der aus dem Reaktionsraum abgezogen und nach eventueller Reinigung (z. B. Entstaubung) der elektrischen Heizeinrichtung zugeleitet und zumindest teilweise ionisiert wird.

Die CO2-Emission liegt beim erfindungsgemäßen Verfahren für 100 kg Wasserstoff vorteilhaft bei weniger als 10 kg CO2/kgH2, bevorzugt bei weniger als 8 kg CO2/kgH2, insbesondere bei weniger als 6 kg CO2/kgH2.

Die bereitzustellende Energie des erfindungsgemäßen Verfahrens beträgt pro Mol umgesetztes Methan vorteilhaft weniger als 500 kJ, bevorzugt weniger als 400 kJ, besonders bevorzugt weniger als 250 kJ, insbesondere weniger als 150kJ.

Die erfindungsgemäße thermische Zersetzungsreaktion von Kohlenwasserstoffen wird vorteilhaft bei einer mittleren Temperatur in der Reaktionszone von 800 bis 1600°C, bevorzugt zwischen 1100 und 1400°C, durchgeführt.

Die erfindungsgemäße thermische Zersetzungsreaktion von Kohlenwasserstoffen wird vorteilhaft bei Atmosphärendruck bis zu einem Druck von 50 bar durchgeführt.

Die Verweilzeit in der Reaktionszone bei der erfindungsgemäßen Zersetzungsreaktion beträgt vorteilhaft 0,5 bis 25 Minuten, bevorzugt 1 bis 60 Sekunden, insbesondere 1 bis 30 Sekunden.

Der Wasserstoff-Volumenstrom des erfindungsgemäßen Verfahrens liegt typischerweise zwischen 1000 und 50000 Ncm/h, bevorzugt zwischen 10000 und 30000 Ncm/h, insbesondere zwischen 15000 und 25000 Ncm/h.

Das Massenstromverhältnis zwischen dem Kohlenwasserstoffgas und dem kohlenstoffhaltigen Granulat ist vorteilhaft zwischen 1,5 und 3, bevorzugt zwischen 1,8 und 2,5.

Der Reaktionsraum weist vorteilhaft einen zylindrischen Querschnitt auf und sein komplettes Volumen ist sowohl für die festen und gasförmigen Reaktionsströme als auch für den gasförmigen Wärmeträger zugänglich.

Vorzugsweise wird das kohlenstoffhaltige Granulat als Wanderbett durch den Reaktionsraum geführt, wobei die zu zersetzenden Kohlenwasserstoffe zweckmäßigerweise im Gegenstrom zum Granulat geleitet werden. Der Reaktionsraum ist hierfür sinnvollerweise als senkrechter Schacht ausgeführt, so dass die Bewegung des Wanderbetts alleine unter Wirkung der Schwerkraft zustande kommt. Das Wanderbett ist vorteilhaft homogen und gleichmäßig durchströmbar. Das kohlenstoffhaltige Granulat kann jedoch auch als Wirbelbett durch den Reaktionsraum geführt werden. Beide Varianten erlauben eine kontinuierliche oder quasikontinuierliche Betriebsweise.

Wird das kohlenstoffhaltige Granulat als Wanderbett durch den Reaktionsraum geführt, so sieht eine besonders bevorzugte Ausgestaltung des erfindungsgemäßen Verfahrens vor, dass das Granulat mit Umgebungstemperatur in den Reaktionsraum eingeleitet, dort zunächst bis auf eine Maximaltemperatur aufgeheizt und anschließend wieder abgekühlt wird, wobei die Maximaltemperatur zwischen 800 bis 1600°C, bevorzugt zwischen 1100 und 1400°C liegt. Die Abkühlung kann bis vorteilhaft maximal 500K, bevorzugt bis maximal 300K, besonders bevorzugt bis maximal 50K oberhalb der Umgebungstemperatur durchgeführt werden, so dass eine Kühlung bzw. Löschung des aus dem Reaktionsraum abgezogenen Kokses nicht erforderlich ist. Zur Ausbildung und Aufrechterhaltung des beschriebenen Temperaturprofils wird vorgeschlagen, ein Gas, das vorzugsweise zu zersetzende Kohlenwasserstoffe enthält, mit Umgebungstemperatur in den Reaktionsraum einzuleiten und im Gegenstrom durch das Wanderbett zu führen. Auf seinem Weg durch den Reaktionsraum tauscht das Gas Wärme mit dem Wanderbett aus, wobei das Gas bis zur Zersetzungstemperatur der Kohlenwasserstoffe aufgeheizt und das Wanderbett gleichzeitig abgekühlt wird. Bei der Zersetzung erzeugter heißer Wasserstoff wird gemeinsam mit nicht reagierten Bestandteilen des Gases weiter im Gegenstrom durch das Wanderbett geführt und in direktem Wärmetausch mit diesem abgekühlt, so dass ein Wasserstoff enthaltendes Gasgemisch mit einer Temperatur in der Nähe der Umgebungstemperatur aus dem Reaktionsraum abgezogen werden kann. Für die Kohlenwasserstoffzersetzung erforderliche thermische Energie wird durch den gasförmigen Wärmeträger insbesondere an Stellen des Reaktionsraums eingebracht, an denen Kohlenwasserstoffe zersetzt werden. Die Erzeugung und/oder Einbringung von thermischer Energie an anderen Stellen des Reaktionsraues soll jedoch nicht ausgeschlossen werden.

Das erfindungsgemäß erzeugte Wasserstoff enthaltende Gasgemisch wird vorzugsweise einer Aufreinigung unterzogen und in eine aus technisch reinem Wasserstoff bestehende Fraktion sowie einen Wasserstoff und Kohlenwasserstoffe enthaltenden Reststrom getrennt. Der Reststrom wird vorteilhaft zumindest teilweise als Recycle in den Reaktionsraum zurückgeführt, um durch Zersetzung der enthaltenen Kohlenwasserstoffe die Wasserstoffausbeute zu erhöhen. Ein anderer Teil des Reststroms wird vorteilhaft einem Brenner zugeführt und dient somit als Brennstoff für die Oxidation, die vorteilhaft die für die gasförmigen Wärmeträger und somit für die Zersetzungsreaktion benötigte thermische Wärme liefert.

Unter Verwendung von Wasserstoff als gasförmigem Wärmeträger kann beispielsweise ein Teil des technisch reinen Wasserstoffs aus dem Produktstrom abgezogen werden, um diesen mit Hilfe der im Brenners erzeugten heißen Gase, beispielsweise in einem Wärmetauscher, aufzuheizen und dann der Reaktionszone (erneut) zuzufügen.

Die Körner, aus denen das aus dem Reaktionsraum abgezogene kohlenstoffhaltige Produkt besteht, streuen in ihrer Korngröße und in ihrer Dichte, so dass eine direkte Verwendung des kohlenstoffhaltigen Produktes beispielsweise als Hochofenkoks nur teilweise möglich ist. Vorteilhaft weist ein Hochofenkoks eine Korngröße zwischen 35 und 80mm und eine Dichte zwischen 0,9 g/cm³ und 1,1 g/cm³ auf. Erfindungsgemäß ist daher vorgesehen, das aus dem Reaktionsraum abgezogene kohlenstoffhaltige Produkt durch Siebung und/oder Sichtung zu klassieren. Körner, die innerhalb der geforderten Spezifikation liegen, werden als Produkt ausgetragen. Körner, deren Durchmesser zu klein oder deren Dichte zu niedrig oder zu hoch für den beabsichtigten Einsatzzweck sind, werden vorzugsweise wieder in den gleichen oder einen parallel betriebenen Reaktionsraum zurückgeführt. Körner mit zu großen Durchmessern werden vor ihrer Rückführung gebrochen und der Feinanteil wird zurückgeführt.

Prinzipiell können sämtliche Kohlenwasserstoffe in den Reaktionsraum eingeleitet und zersetzt werden, wobei jedoch leichte Kohlenwasserstoffe, beispielsweise Methan, Ethan, Propan, Butan, vorgezogen werden. Eine besonders bevorzugte Ausgestaltung des erfindungsgemäßen Verfahrens sieht vor, dass Erdgas, wobei im Erdgas der Methananteil typischerweise zwischen 75 und 99 % der molaren Faktion in Abhängigkeit von der Erdgaslagerstätte liegt, in den Reaktionsraum eingeleitet und Methan in Wasserstoff und Kohlenstoff zersetzt wird.

Zur Erzeugung eines hochreinen Wasserstoffproduktes kann es erforderlich sein, die in den Reaktionsraum einzuleitenden Stoffströme von Substanzen zu reinigen, die selbst im Wasserstoffprodukt unerwünscht sind oder die im Reaktionsraum in unerwünschte Substanzen umgesetzt werden können. Zusätzlich oder alternativ können unerwünschte Substanzen auch aus den aus dem Reaktionsraum abgezogenen Gasen abgetrennt werden. Zu den unerwünschten Substanzen gehören beispielsweise Schwefelverbindungen, ein- oder mehrringige Aromaten, wie beispielsweise Benzol, Toluol, Xylol und/oder Napthalin, sowie andere Kohlenwasserstoffe, die u.a. in Erdgas enthalten sein können.

Eine Ausgestaltung des erfindungsgemäßen Verfahrens sieht daher vor, dass ein im Verfahren auftretendes Gas zur Reinigung durch ein Koksbett geleitet und dabei von Substanzen befreit wird, die selbst im Wasserstoffprodukt unerwünscht sind oder im Reaktionsraum in unerwünschte Substanzen umgesetzt werden können. Abhängig von seiner Qualität kann der bei der Gasreinigung mit unerwünschten Substanzen beladene Koks durch Verbrennung entsorgt oder einer Kokerei als Einsatz zugeführt werden.

Gegenüber dem Stand der Technik auf dem Gebiet der Kokserzeugung bietet das erfindungsgemäße Verfahren die Möglichkeit, hochwertigen Koks ohne aufwendige und/oder umweltschädliche Kokskühlung in einem geschlossenen Apparat zu erzeugen. Als weiterer Vorteil gegenüber dem Stand der Technik kann angesehen werden, dass das erfindungsgemäße Verfahren ohne den Einsatz von Kokskohle durchgeführt werden kann, deren Preise in absehbarer Zukunft erheblich steigen werden.

Durch das erfindungsgemäße Verfahren kann die erzeugte Kohlenstoffmenge durch den gut regulierbaren und schnell im Reaktor ansprechenden erfindungsgemäßen Wärmeeintrag in einem großen Bereich gesteuert werden, der weitgehend unabhängig von der eingesetzten Menge an kohlenstoffhaltigem Granulat ist. Insbesondere erlaubt es das erfindungsgemäße Verfahren, die spezifische Menge des auf dem Granulat abgeschiedenen Kohlenstoffs gegenüber dem Stand der Technik erheblich zu vergrößern.

Durch das erfindungsgemäße Verfahren lassen sich die Koppelprodukte Wasserstoff und Kohlenstoff unter anderem durch die integrierte Wärmerückführung, das unstrukturierte Reaktorvolumen und die Nutzung eines gasförmigen Wärmeträgers großtechnisch herstellen, ferner weisen diese Produkte einen geringen CO2-Fußabdruck auf.

Die Verwendung von CO2 als Chemierohstoff für eine Massenproduktion erfordert die Aktivierung z.B. zu Synthesegas durch ein möglichst klimaneutrales Reduktionsmittel. Die Bereitstellung von Wasserstoff durch ein CO2-armes und kostengünstiges Verfahren stellt den Schlüssel hierfür dar. Durch diesen Wasserstoff kann eine CO2-Aktivierung durch Reverse Water Gas Shift Reaktion (RWGS) ausreichend CO2 verwerten, um signifikante CO2-Einsparpotentiale zu erschließen.

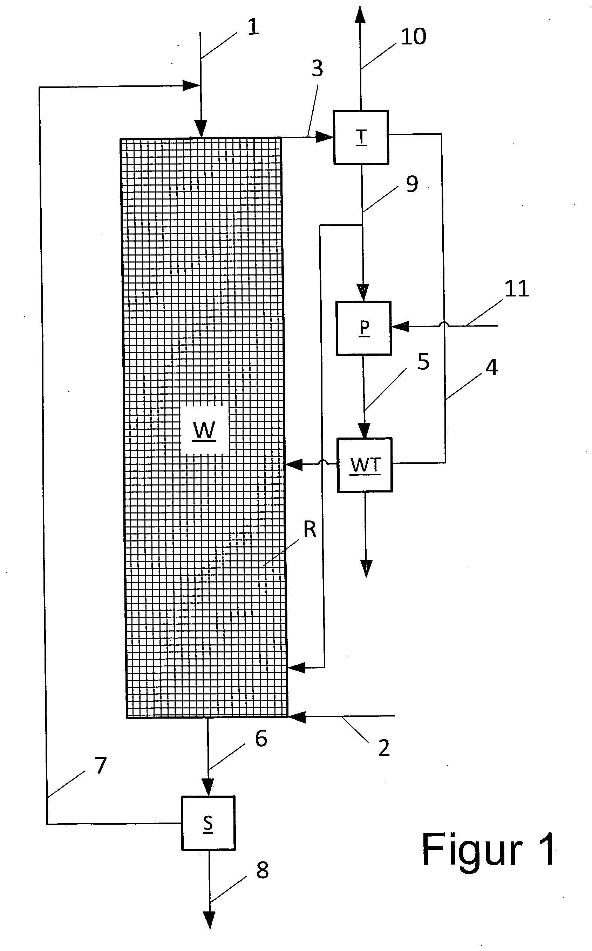

Im Folgenden soll die Erfindung anhand eines in der Figur 1 schematisch dargestellten Ausführungsbeispiels näher erläutert werden.

Die Figur 1 zeigt eine Variante des erfindungsgemäßen Verfahrens, bei dem Hochofenkoks in einem kontinuierlichen Prozess mit Hilfe eines gasförmigen Wärmeträgers gewonnen wird.

Über die Zuführung 1 wird ein kohlenstoffhaltiges Granulat, bei dem es sich beispielsweise um Koksgrus handelt, mit Umgebungstemperatur von oben in den Reaktionsraum R eingeleitet, durch den es nachfolgend unter Wirkung der Schwerkraft in einem Wanderbett W nach unten geführt wird. Ein Kohlenwasserstoffe enthaltendes Gas 2, bei dem es sich vorzugsweise um Erdgas handelt, wird gleichzeitig von unten in den Reaktionsraum R geleitet und im Gegenstrom durch das Wanderbett W nach oben geführt. Das Gas 2, das bei seinem Eintritt in den Reaktionsraum R Umgebungstemperatur aufweist, wird auf seinem Weg nach oben in direktem Wärmetausch mit dem Wanderbett W bis zur Zersetzungstemperatur der Kohlenwasserstoffe aufgeheizt, die unter diesen Bedingungen in einer endothermen Reaktion in Wasserstoff und Kohlenstoff zerfallen. Der hierbei gebildete Kohlenstoff lagert sich zu mehr als 95 Gew.-% an die kohlenstoffhaltigen Körner des Wanderbetts W an, wodurch deren Qualität verbessert wird. Zusammen mit nicht oder nur zum Teil umgesetzten Kohlenwasserstoffen strömt der gebildete heiße Wasserstoff weiter nach oben, wobei er in direktem Wärmetausch mit dem Wanderbett W abgekühlt wird, so dass über Leitung 3 ein Wasserstoff enthaltendes Gasgemisch mit einer Temperatur abgezogen und in die Trenneinrichtung T eingeleitet werden kann, die oberhalb der Umgebungstemperatur aber mindestens 500K unter der Reaktionstemperatur liegt. Das Wasserstoff enthaltende Gasgemisch 3 wird in der Trenneinrichtung T in eine aus technisch reinem Wasserstoff bestehende Fraktion 4 und einen Wasserstoff sowie Kohlenwasserstoffe enthaltenen Reststrom 9 getrennt. Aus einem Teil des erhaltenden Reststroms 9 wird in einem Brenner unter Zufuhr eines Oxidationsmittels 11 ein heißes Gas 5 erzeugt, dass seine Wärme an einen Teil der technisch reinen Wasserstofffraktion 4 unter Einsatz eines Wärmetauschers WT abgibt. Der Rest 10 der technisch reinen Wasserstofffraktion wird als Wasserstoff-Produkt abgegeben wird. Der andere Teil des Reststroms 9 wird zur Erhöhung der Wasserstoffausbeute als Recycle in den Reaktionsraum R zurückgeführt. Der aufgeheizte Teil der Wasserstofffraktion wird in den Reaktionsraum R eingeleitet und stellt dort den überwiegenden Teil der für die Kohlenwasserstoffzersetzung benötigten Energie bereit. Am unteren Ende des Reaktionsraums R wird Granulat 6 mit nahezu Umgebungstemperatur abgezogen, das aufgrund der Kohlenstoffanlagerungen beispielsweise als Hochofenkoks oder Kokereizuschlagsstoff eingesetzt werden kann. Bestandteile des Granulats 6, die die Qualitätsanforderungen nicht erfüllen, weil sie einen zu großen (> 80 mm) oder zu kleinen Durchmesser (< 35 mm) oder beispielsweise eine zu geringe Festigkeit (Trommelfestigkeit I40 für Hochofenkoks > 40% aufweisen gemäß ISO/FDIS 18894:2003) aufweisen, werden in der Trenneinrichtung S durch Siebung und/oder Sichtung abgetrennt und nach einer eventuellen Zerkleinerung über Leitung 7 wieder in den Reaktionsraum R zurückgeführt. Bei dem verbleibenden Rest 8 handelt es sich um Hochofenkoks, der als hochwertiges Produkt abgegeben wird.

## Patentansprüche

1. Verfahren zur parallelen Herstellung von Wasserstoff und einem oder mehreren kohlenstoffhaltigen Produkten, bei dem Kohlenwasserstoffe in einen Reaktionsraum eingeleitet und in Gegenwart eines kohlenstoffreichen Granulats thermisch in Kohlenstoff und Wasserstoff zersetzt werden, **dadurch gekennzeichnet, dass** wenigstens ein Teil der für die Kohlenwasserstoffzersetzung erforderlichen thermischen Energie über einen oder mehrere gasförmige Wärmeträger bereitgestellt wird, wobei die thermische Energie außerhalb des Reaktionsraums erzeugt wird und anschließend die so aufgeheizten gasförmigen Wärmeträger in den Reaktionsraum eingebracht werden, wobei der gasförmige Wärmeträger zur Kohlenwasserstoffzersetzungsreaktion inert ist und/oder ein Produkt dieser Kohlenwasserstoffreaktion darstellt und im Reaktionsraum der gasförmige Wärmeträger seine Wärme an den oder die Reaktanden abgibt.

2. Verfahren nach Anspruch 1, **dadurch gekennzeichnet, dass** der gasförmige zur Kohlenwasserstoffreaktion inerte Wärmeträger und/oder der Wärmeträger, der ein Produkt dieser Kohlenwasserstoffreaktion darstellt, durch heißes Gas, das durch Oxidation oder partielle Oxidation von Kohlenwasserstoffen und/oder Wasserstoff erzeugt wird, aufgeheizt wird, wozu Luft und/oder mit Sauerstoff angereicherte Luft und/oder technisch reiner Sauerstoff als Oxidationsmittel eingesetzt werden.

3. Verfahren nach Anspruch 1 oder 2, **dadurch gekennzeichnet, dass** Wasserstoff und/oder Stickstoff als gasförmiger Wärmeträger verwendet wird.

4. Verfahren nach einem oder mehreren der Ansprüche 1 bis 3, **dadurch gekennzeichnet, dass** mindestens 50 % der für die Kohlenwasserstoffzersetzung und Wärmerückführung erforderlichen thermischen Energie über gasförmige Wärmeträger bereitgestellt wird.

5. Verfahren nach einem oder mehreren der Ansprüche 1 bis 4, **dadurch gekennzeichnet, dass** das kohlenstoffhaltige Granulat mindestens 80 Gew.-% Kohlenstoff und eine Körnung von 0,1 bis 100 mm aufweist.

6. Verfahren nach einem oder mehreren der Ansprüche 1 bis 5, **dadurch gekennzeichnet, dass** das kohlenstoffhaltige Granulat als Wander- oder Wirbelbett kontinuierlich durch den Reaktionsraum geführt wird.

7. Verfahren nach Anspruch 6, **dadurch gekennzeichnet, dass** bei der Kohlenwasserstoffzersetzung gebildeter Wasserstoff im Gegenstrom durch das Wanderbett geführt und in direktem Wärmetausch mit diesem abgekühlt wird.

8. Verfahren nach Anspruch 6 oder 7, **dadurch gekennzeichnet, dass** die Kohlenwasserstoffe mit Umgebungstemperatur in den Reaktionsraum eingeleitet und im Gegenstrom durch das Wanderbett geführt werden.

9. Verfahren nach einem oder mehreren der Ansprüche 1 bis 8, **dadurch gekennzeichnet, dass** ein Teil des aus dem Reaktionsraum abgezogenen kohlenstoffhaltigen Granulats wieder in den Reaktionsraum zurückgeführt wird.

10. Verfahren nach einem oder mehreren der Ansprüche 1 bis 9, **dadurch gekennzeichnet, dass** das kohlenstoffreiche Granulat Koksgrus und/oder geringwertigen Kokereikoks auf Braun- oder Steinkohlebasis und/oder aus Biomasse gewonnenen Koks umfasst.

## Claims

1. A process for parallel preparation of hydrogen and one or more carbonaceous products, in which hydrocarbons are introduced into a reaction space and decomposed thermally to carbon and hydrogen in the presence of carbon-rich pellets, wherein at least a portion of the thermal energy required for the hydrocarbon decomposition is provided by means of one or more gaseous heat carriers, the thermal energy being produced outside the reaction space and the gaseous heat carriers thus heated then being introduced into the reaction space, it being the case that the gaseous heat carrier for the hydrocarbon decomposition reaction is inert and/or constitutes a product in this hydrocarbon reaction and the gaseous heat carrier releases its heat to the reactant(s) in the reaction space.

2. The process according to claim 1, wherein the gaseous heat carrier inert to the hydrocarbon reaction and/or the heat carrier which constitutes a product of this hydrocarbon reaction is heated by hot gas which is produced by oxidation or partial oxidation of hydrocarbons and/or hydrogen, for which air and/or oxygen-enriched air and/or oxygen of technical grade purity is used as the oxidizing agent.

3. The process according to claim 1 or 2, wherein hydrogen and/or nitrogen is used as the gaseous heat carrier.

4. The process according to one or more of claims 1 to 3, wherein at least 50% of the thermal energy required for the hydrocarbon decomposition and heat recycling is provided by means of gaseous heat carriers.

5. The process according to one or more of claims 1 to 4, wherein the carbonaceous pellets contain at least 80% by weight of carbon and have a particle size of 0.1 to 100 mm.

6. The process according to one or more of claims 1 to 5, wherein the carbonaceous pellets are conducted continuously through the reaction space as a moving or fluidized bed.

7. The process according to claim 6, wherein hydrogen formed in the hydrocarbon decomposition is conducted through the moving bed in countercurrent and is cooled therewith in direct heat exchange.

8. The process according to claim 6 or 7, wherein the hydrocarbons are introduced into the reaction space at ambient temperature and conducted through the moving bed in countercurrent.

9. The process according to one or more of claims 1 to 8, wherein a portion of the carbonaceous pellets drawn off from the reaction space is recycled back into the reaction space.

10. The process according to one or more of claims 1 to 9, wherein the carbon-rich pellets comprise coke breeze and/or low-grade coke from a coking plant based on brown or hard coal and/or coke obtained from biomass.

## Revendications

1. Procédé de fabrication parallèle d'hydrogène et d'un ou de plusieurs produits contenant du carbone, selon lequel des hydrocarbures sont introduits dans une chambre de réaction et décomposés thermiquement en carbone et hydrogène en présence d'un granulat riche en carbone, **caractérisé en ce qu'**au moins une partie de l'énergie thermique nécessaire pour la décomposition des hydrocarbures est mise à disposition par un ou plusieurs caloporteurs gazeux, l'énergie thermique étant générée à l'extérieur de la chambre de réaction, puis les caloporteurs gazeux ainsi chauffés étant introduits dans la chambre de réaction, le caloporteur gazeux étant inerte vis-à-vis de la réaction de décomposition des hydrocarbures et/ou constituant un produit de cette réaction des hydrocarbures, et le caloporteur gazeux transférant sa chaleur au réactif ou aux réactifs dans la chambre de réaction.

2. Procédé selon la revendication 1, **caractérisé en ce que** le caloporteur gazeux inerte vis-à-vis de la réaction des hydrocarbures et/ou le caloporteur qui constitue un produit de cette réaction des hydrocarbures sont chauffés par un gaz chaud, qui est formé par oxydation ou oxydation partielle d'hydrocarbures et/ou d'hydrogène, pour laquelle de l'air et/ou l'air enrichi en oxygène et/ou de l'oxygène techniquement pur sont utilisés en tant qu'oxydant.

3. Procédé selon la revendication 1 ou 2, **caractérisé en ce que** de l'hydrogène et/ou de l'azote sont utilisés en tant que caloporteur gazeux.

4. Procédé selon une ou plusieurs des revendications 1 à 3, **caractérisé en ce qu'**au moins 50 % de l'énergie thermique nécessaire pour la décomposition des hydrocarbures et le recyclage de la chaleur est mise à disposition par des caloporteurs gazeux.

5. Procédé selon une ou plusieurs des revendications 1 à 4, **caractérisé en ce que** le granulat contenant du carbone comprend au moins 80 % en poids de carbone et présente une granulométrie de 0,1 à 100 mm.

6. Procédé selon une ou plusieurs des revendications 1 à 5, **caractérisé en ce que** le granulat contenant du carbone est conduit en continu au travers de la chambre de réaction sous la forme d'un lit mobile ou fluidisé.

7. Procédé selon la revendication 6, **caractérisé en ce que** l'hydrogène formé lors de la décomposition des hydrocarbures est conduit à contre-courant au travers du lit mobile et refroidi par échange de chaleur direct avec celui-ci.

8. Procédé selon la revendication 6 ou 7, **caractérisé en ce que** les hydrocarbures sont introduits dans la chambre de réaction à température ambiante et conduits à contre-courant au travers du lit mobile.

9. Procédé selon une ou plusieurs des revendications 1 à 8, **caractérisé en ce qu'**une partie du granulat contenant du carbone soutiré de la chambre de réaction est réintroduit dans la chambre de réaction.

10. Procédé selon une ou plusieurs des revendications 1 à 9, **caractérisé en ce que** le granulat riche en carbone comprend du poussier de coke et/ou du coke de cokerie de faible valeur à base de lignite ou de houille et/ou du coke obtenu à partir d'une biomasse.
